# EUROPEAN PATENT APPLICATION

(11) **EP 2 884 298 A1**
(43) Date of publication of application: **17.06.2015**
(21) Application number: 13197043.6
(22) Date of filing: 13.12.2013
(51) Int. Cl.: G01S 7/00, G01S 13/00, G01S 19/00

(54) **Method and distributed system for flying objects tracking using consumer electronics devices**

(71) Applicant: Advanced Digital Broadcast S.A., 1292 Geneva (CH)
(72) Inventor: Micewicz, Jaroslaw, 65-119 Zielona Gora (PL); Bordych, Maciej, 65-119 Zielona Gora (PL)
(74) Representative: Blonski, Pawel

(57) **Abstract**

A consumer electronics terminal for use in a distributed system for flying objects tracking, the terminal comprising: a location determination signal receiver; a controller; a memory; and a data transmitter, the terminal further comprising: the controller being configured to receive data from the location determination signal receiver and to communicate, using the data transmitter information regarding change of signal strength of a given available at least one satellite to at least one server. The invention also concerns a radar facility for flying objects tracking using consumer electronics devices, the radar facility comprising: a database configured to store information received from a plurality of consumer electronics terminals according to the invention; a data processor configured to filter the data stored in the database according to rules stored in a rules database; the data processor being further configured to recognize, based on the filtered data, coherent changes in time denoting a route of a flying object.

## Description

The present invention relates to a method and distributed system for flying objects tracking using consumer electronics devices. The method finds its applicability in cases where stealth objects are to be detected or any other objects that may not be detectable by typical active radar systems. Furthermore, the method finds its application in flying objects trajectory prediction systems.

In prior art there is know a concept of a passive radar. Passive radar systems (also referred to as passive coherent location and passive covert radar) encompass a class of radar systems that detect and track objects by processing reflections from non-cooperative sources of illumination in the environment, such as commercial broadcast and communications signals. It is a specific case of bistatic radar, the latter also including the exploitation of cooperative and non-cooperative radar transmitters (source: Wikipedia).

Such systems however require specialized, complex and expensive equipment in order to detect non-cooperative flying objects.

It would be thus desirable to provide an efficient computer implemented method and distributed system for flying objects tracking using consumer electronics devices.

The object of the present invention is a consumer electronics terminal for use in a distributed system for flying objects tracking, the terminal comprising a location determination signal receiver; a controller; a memory; and a data transmitter the terminal being characterized in that it further comprises: the controller being configured to receive data from the location determination signal receiver and to communicate, using the data transmitter information regarding change of signal strength of a given available at least one satellite to at least one server.

Another object of the present invention is a radar facility for flying objects tracking using consumer electronics devices, the radar facility comprising: a database configured to store information received from a plurality of consumer electronics terminals according to the present invention; a data processor configured to filter the data stored in the database according to rules stored in a rules database; the data processor being further configured to recognize, based on the filtered data, coherent changes in time denoting a route of a flying object.

Preferably, the filtering executed by the data processor discard messages relevant for areas, which are known to have poor GPS reception.

Preferably, the information received from a plurality of consumer electronics terminals comprises GGA or GGA + GSV + GSA data according to NMEA standard.

Preferably, the data processor is configured to compare the recognized coherent changes in time denoting a route of a flying object with a flight control database data in order to eliminate known flying objects from recognized coherent changes in time denoting a route of a flying object.

Preferably, the data processor is configured to calculate flying object's properties, based on signal changes of a particular satellite.

Another object of the present invention is a method and for flying objects tracking using consumer electronics devices the method being characterized in that it comprises the steps of: receiving and storing information received from a plurality of consumer electronics terminals according to the present invention in a database; filtering a group messages, from the database, applicable for a given time instant and a given area; recognizing coherent changes of signal strength in time, which denote possible candidates of a route of a flying object; comparing the possible candidates of routes with external data from at least one external database in order to eliminate known flying objects; selecting unknown objects; and calculating flying object properties, based on signal changes of a particular satellite, for the selected unknown objects.

Preferably, the object properties are selected from a group of speed of the flying object, a possible position in the near future, altitude of flight, size, average track width.

Preferably, the information received from a plurality of consumer electronics terminals comprises GGA or GGA + GSV + GSA data according to NMEA standard.

Preferably, the step of filtering a group messages discards loss of signal messages and/or messages relevant for areas, which are known to have poor GPS reception.

Another object of the present invention is a computer program comprising program code means for performing all the steps of the method according to the present invention when said program is run on a computer.

Another object of the present invention is a computer readable medium storing computer-executable instructions performing all the steps of the method according to the present invention when executed on a computer.

The present invention is shown by means of exemplary embodiments on a drawing, in which:
Fig. 1 presents a schematic diagram of the system according to the present invention; and
Fig. 2 depicts a schematic diagram of the method according to the present invention.

There are commonly used location determination systems such as the Global Positioning System (GPS) or Global Navigation Satellite System (GLONASS). The GPS is a space-based satellite navigation system that provides location and time information in all weather conditions, anywhere on or near the Earth where there is an unobstructed line of sight to four or more GPS satellites. The system provides critical capabilities to military, civil and commercial users around the world. It is maintained by the United States government and is freely accessible to anyone with a GPS receiver (source: Wikipedia).

Additionally, nowadays there are increasingly common GPS signals detectors built in mobile communication devices such as mobile phones, satellite phones, portable computers, navigation systems collectively called consumer electronics devices. Such consumer electronics devices frequently, if not always, comprise wired or wireless connectivity allowing for preferably bidirectional data communication, for example Wi-Fi or 3G.

The aim of the present invention is to utilize the processing power and multitude of the consumer electronics devices (eg. millions of units at a given instant) equipped with location determination system and communication means (preferably bidirectional) in order to provide a report to a radar system's server.

Such short report shall inform the server of detection of location determining signal changes in a given location. This feature may be implemented using NMEA 0183 standard messages GGA or GGA+GSV+GSA. This small amount of data sent from the consumer electronics device to a predefined data base (eg. in cloud) will form a basis for further analysis at radar system's facility.

The changes of location determining signal strength (or other signal parameters such as jitter collectively referred to as signal strength) in a given location may be reported by the consumer electronics device to a centralized server (radar system's facility) only in case a predefined change threshold has been reached.

The system according to the present invention is a distributed system of passive detection of objects in space to an altitude of about 20 thousand kilometers over a given area, based on a database content updated continuously by consumer electronic devices.

The radar system's server executes analysis algorithms that analyze data received from multiple radar detectors (consumer electronic devices) to develop predictions about the likelihood of future alerts or threats in geographic locations.

The radar system's server may communicate the predictions to each of the radar detectors based on the geographic locations corresponding to each of the multiple radar detectors (consumer electronic devices). Each radar detector may communicate alert levels as needed to its corresponding radar detector user, based on predictions that correspond to the geographic locations corresponding to each of the radar detectors.

The millions of retrieved reports are stored in a database and will make it feasible to show a map of signal changes/fluctuation at specific time instant for a given area. Naturally, there may be a lot of information about signal fluctuation due to environmental parameters such as driving via a tunnel, obscuring signal by buildings, presence in a forest, rain clouds, technical problems in GPS infrastructure etc. Nevertheless flying objects will also cause location determination systems' signal changes/fluctuation.

When such maps, generated at specific time period, are displayed and analyzed from the time point of view (frame by frame), it is be possible to find a tendency of group(s) of signal changes - similar to weather maps.

Based on such analysis, it is possible to find a path of changes of interest (in contrast to changes due to technical, construction objects or weather). A path of changes of interest may be compared with data available from flight control system and meteo systems in order to determine what kind of conditions causes location determination systems signal changes/fluctuation. In case of unknown reason of path of changes, which is observed, in a given area, it is possible to estimate a position of the change in the near future and inform an appropriate military, police or flight control organizations.

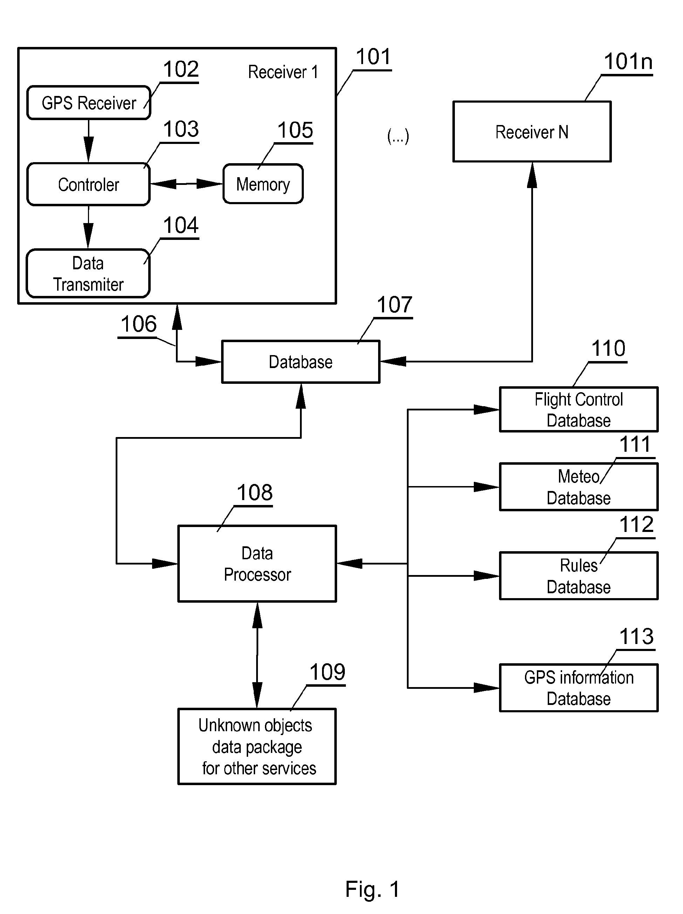

Fig. 1 presents a schematic diagram of the system according to the present invention. The system comprises a plurality of consumer electronics devices 101 - 101 n, each of them comprising a location determination signal receiver such as a GPS signal receiver 102.

The GPS signal receiver 102 inputs data to a controller 103 that processes the received data using a memory component 105. The controller may analyze the data and calculate location of the receiver 101 based on the signals received by the GPS signal receiver 102.

The receiver 101 is additionally communicatively coupled with a radar system's database 107. A data transmitter 104, communicatively coupled to the controller 103, is utilized to communicate a message from the receiver 101 to a radar system's server comprising the database 107. The message preferably comprises GGA or GGA + GSV + GSA data provided by the GPS receiver (in the NMEA standard) and alternatively time and location information regarding the receiver's position and/or change of signal strength of a given available satellite. The data transmitter 104, in an advantageous configuration, allows for a bidirectional data exchange 106.

The database 107 stores information received from the receivers 101 - 101 n. The data stored in the database 107 is utilized by the data processor 108 configured to filter the data, for example by discarding loss of signal messages, to group messages applicable for a given time instant and a given area.

The processor 108 may also discard messages (based on data from at least one external database) relevant for areas, which are known to have poor GPS reception (based on meteorological data obtained from a Meteo Database 111) due to for example a storm, snowfall etc. and/or GPS system technical/maintenance reasons. The data processor 108 may recognize coherent changes in time which could be a route of a flying object and compare estimated routes with a flight control database 110 in order to eliminate (based on data from at least one external database) known flying objects from the analysis. Finally the data processor 108 may output 109 (using suitable data output techniques) unknown objects data package for other services. Prior to such output, the data processor 108, may calculate object properties, based on signal changes of a particular satellite. For example calculate the speed of the flying object, estimate a possible position in the near future, estimate altitude of flight or estimate the size of the object based on average track width.

A rules database 112 may be employed for storing information regarding methods of determining proper trajectories (The system may learn from its confirmed results). Additionally, there may be stored filtering rules as well as data aggregation rules for paths and/or path width estimation rules.

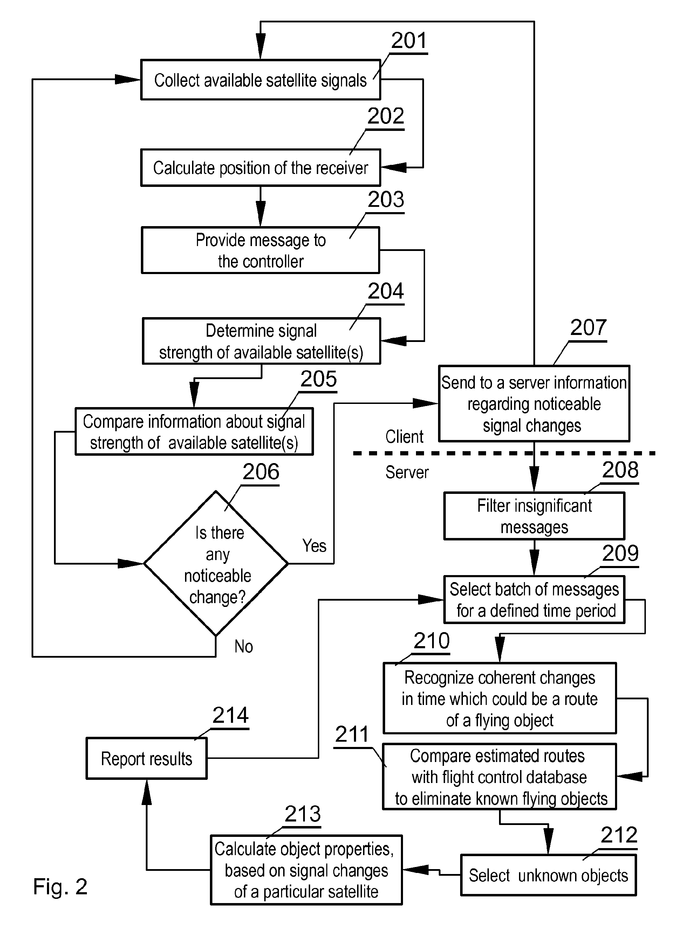

Fig. 2 depicts a schematic diagram of the method according to the present invention. The method is partially executed at a consumer electronics device (steps 201 to 207) and partially on a radar system's server (steps 208 to 214).

At a consumer electronics device 101, there are collected available satellite signals 201 by the location determination signal receiver 102. Based on this data, there is calculated 202 a position of the receiver 101. Subsequently, at step 203, there is provided a message from the location determination signal receiver 102 to the controller 103, the message providing location signal(s) data. At step 204, there is determined signal strength of available satellite(s). Next, at step 205, the consumer electronics device compares information regarding signal strength of available satellite(s) with signal strength values temporarily stored in the memory 105 for the same satellite(s) at, at least one, preceding time instant. In case the controller 103 detects a noticeable change in signal strength, it proceeds to step 207 where there is sent, to a server of the radar system, information regarding noticeable signal change(s). Otherwise, when the controller 103 does not detect a noticeable change in signal strength, the procedure returns to step 201.

The sending step 207 may be executed periodically, on demand or when a batch of data has been collected comprising a set of messages.

The radar system's server receives data, regarding noticeable change in signal strength, from a plurality of consumer electronic devices 101 - 101 n and stores the data in the database 107. Subsequently, the server executes a filtering step 208 for example by discarding loss of signal messages, to group messages applicable for a given time instant and a given area. At this step, the processor 108 may also discard messages relevant for areas, which are known to have poor GPS reception (based on meteorological data obtained from a Meteo Database 111) due to for example a storm, snowfall etc. Similarly the processor 108 may discard data in view of change(s) of satellites availability or other technical reasons based on data from a GPS database 113 for a particular area.

Next, at step 209, the server selects a batch of messages, from the database 107, for a defined time period. Then the procedure advances to step 210 where there are recognized coherent changes in time, which could be a route of a flying object (such coherent changes denote possible candidates of route(s)).

The methods for recognizing coherent changes in time may include methods known from image processing techniques (such as segmentation and recognition) utilizing linear and non-linear filters and/or utilizing convolution and morphological filters.

Subsequently, at step 211, there are compared estimated routes with flight control database 101 data in order to eliminate known flying objects. Next, at step 212, based on the preceding analysis there are selected unknown flying objects, for which optionally the processor 108 may calculate flying object properties, based on signal changes of a particular satellite. Lastly, the results of the analysis are reported at step 214. Such reporting may for example reach certain authorities including flight control or military units.

It can be easily recognized, by one skilled in the art, that the aforementioned method for flying objects tracking using consumer electronics devices may be performed and/or controlled by one or more computer programs. Such computer programs are typically executed by utilizing the computing resources of the device. The computer programs can be stored in a non-volatile memory, for example a flash memory or in a volatile memory (or otherwise a non-transitory computer readable medium), for example RAM and are executed by the processing unit. These memories are exemplary recording media for storing computer programs comprising computer-executable instructions performing all the steps of the computer-implemented method according the technical concept presented herein.

While the invention presented herein has been depicted, described, and defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

In addition, any combination of the appended claims in envisaged in the present application.

## Claims

1. A consumer electronics terminal for use in a distributed system for flying objects tracking, the terminal comprising:
o a location determination signal receiver (102);
o a controller (103);
o a memory (105); and
o a data transmitter (104)
the terminal being **characterized in that** it further comprises:
o the controller (103) being configured to receive data from the location determination signal receiver (102) and to communicate, using the data transmitter (104) information regarding change of signal strength of a given available at least one satellite to at least one server.

2. A radar facility for flying objects tracking using consumer electronics devices, the radar facility comprising:
o a database (107) configured to store information received from a plurality of consumer electronics terminals according to claim 1 (101 - 101 n);
o a data processor (108) configured to filter the data stored in the database (107) according to rules stored in a rules database (112);
o the data processor (108) being further configured to recognize, based on the filtered data, coherent changes in time denoting a route of a flying object.

3. The radar facility according to claim 2 **characterized in that** the filtering executed by the data processor (108) discard messages relevant for areas, which are known to have poor GPS reception.

4. The radar facility according to claim 2 **characterized in that** the information received from a plurality of consumer electronics terminals comprises GGA or GGA + GSV + GSA data according to NMEA standard.

5. The radar facility according to claim 2 **characterized in that** the data processor (108) is configured to compare the recognized coherent changes in time denoting a route of a flying object with a flight control database (110) data in order to eliminate known flying objects from recognized coherent changes in time denoting a route of a flying object.

6. The radar facility according to claim 2 **characterized in that** the data processor (108) is configured to calculate flying object's properties, based on signal changes of a particular satellite.

7. A method and for flying objects tracking using consumer electronics devices the method being **characterized in that** it comprises the steps of:
o receiving and storing information received from a plurality of consumer electronics terminals according to claim 1 (101 - 101 n) in a database (107);
o filtering (208) a group messages, from the database (107), applicable for a given time instant and a given area;
o recognizing (210) coherent changes of signal strength in time, which denote possible candidates of a route of a flying object;
o comparing (211) the possible candidates of routes with external data from at least one external database (110, 111, 112) in order to eliminate known flying objects;
o selecting (212) unknown objects; and
o calculating (213) flying object properties, based on signal changes of a particular satellite, for the selected unknown objects.

8. The method according to claim 7 **characterized in that** the object properties are selected from a group of speed of the flying object, a possible position in the near future, altitude of flight, size, average track width.

9. The method according to claim 7 **characterized in that** the information received from a plurality of consumer electronics terminals comprises GGA or GGA + GSV + GSA data according to NMEA standard.

10. The method according to claim 7 **characterized in that** the step of filtering (208) a group messages discards loss of signal messages and/or messages relevant for areas, which are known to have poor GPS reception.

11. A computer program comprising program code means for performing all the steps of the method according to claim 7 when said program is run on a computer.

12. A computer readable medium storing computer-executable instructions performing all the steps of the method according to claim 7 when executed on a computer.
